# EUROPEAN PATENT APPLICATION

(11) **EP 3 524 585 A1**
(43) Date of publication of application: **14.08.2019**
(21) Application number: 18155795.0
(22) Date of filing: 08.02.2018
(51) Int. Cl.: C04B 28/04, C04B 7/12, C04B 7/13, C04B 14/10

(54) **USE OF MICROWAVE CALCINED CLAY AS SUPPLEMENTARY CEMENTITIOUS MATERIAL**

(71) Applicant: HeidelbergCement AG, 69120 Heidelberg (DE)
(72) Inventor: ROSANI, Diego, 22100 Como (IT); MIKANOVIC, Nikola, 69181 Leimen (DE)
(74) Representative: Zellentin & Partner mbB Patentanwälte

(57) **Abstract**

Use of clay calcined by microwave as supplementary cementitious material in composite binders, use of microwaves for calcining clay to be used as supplementary cementitious material in composite binders, method for calcining clay to be used as supplementary cementitious material in composite binders, comprising calcining a raw clay with microwaves wherein the temperature and time for calcining are adjusted so that a substantial dehydroxylation is achieved without crystallization of the calcined clay, and supplementary cementitious material comprising a calcined clay obtained thereby.

## Description

The present invention relates to a use of clay calcined by microwave as supplementary cementitious material in composite binders.

Hydraulic binders are an important component of many construction materials like concrete, mortar, screed, and pre-cast units. They are generally deemed responsible for a considerable amount of carbon dioxide generation, since the most common binder, Portland cement, requires a lot of energy to manufacture and also releases CO₂ from one of its raw materials, limestone, during production. Thus, many efforts have been made and succeeded to diminish carbon dioxide generation. Among others, partial replacement of clinker with supplementary cementitious material in composite binders, usinf alternative raw materials and/or fuels and even identifying alternative binders.

The production of composite (blended) binders commonly relies on the availability of conventional supplementary cementitious materials (SCM), such as limestone, natural pozzolana, fly ash, granulated blast furnace slag. However, availability of such materials is not always granted, due to logistics or supply shortage, and could become more problematic in the future due to expected fundamental changes in the production processes where these materials originate.

In this respect, searching for alternative materials is of vital importance for cement operations located far away from main sources of conventional SCM or in areas where long-term supply cannot be envisaged.

An interesting opportunity is calcined clay. When exposed to a well-controlled thermal process, clays of suitable composition can develop pozzolanic properties and successfully replace other constituents in cement composition. The achievable material performance strongly depends on the clay composition and the calcination process applied. Proposals for making SCM from clay are found for example in US 6,221,148 B1, EP 2 226 363 A1, WO 2010/130511 A1, US 5,626,665 A, US 2014/0000491 A1, US 2017/0267586 A1, and EP 3 248 952 A1.

The term clay has many different definitions. One is simply based on granulometry, i.e. a rock consisting of particles of any composition that have a diameter less than 2 or 4 µm. Such size is approximately the upper limit of particles that show colloidal properties. Alternatively, clay is defined as a predominantly plastic rock composed primarily of clay mineral particles and subordinate amounts of e.g. finely divided quartz and feldspar that can become permanently hard on heating. In this respect the particle size plays a minor role. However, if the size of the particles predominantly exceeds 4 µm, such material should better be named loam or silt. The latter is much more common than "real clay". The small particle size is based on specific mineral compositions. The respective enriched minerals are known as clay minerals. These are predominantly phyllosilicates (sheet silicates) like e.g. illite, montmorillonite and kaolinite. However, there are also two inosilicatic (chain lattice) clay minerals, i.e. palygorskite and sepiolite.

Clay deposits occur in many places around the globe. They are mainly products of weathering of older rocks that stayed in situ or were transported to different sites, e.g. in suspension by rivers to the sea. Kaolinite and montmorillonite are mainly formed in the tropical climate of the low latitudes of the earth, whereas illite is predominantly formed in the higher latitudes and also in polar climates.

Three main aspects are to be considered for a successful production of composite cements containing calcined clay:
- adequate selection of clay
- precise definition of calcination conditions
- proper cement design based on market requirements and available production facilities

When clay of suitable origin is submitted to a thermal process, the chemically bound water entrapped in its layers is released; this causes modification of its structure and the formation of highly disordered material which can then react typically as a pozzolanic material, i.e. harden by reaction with alkaline compounds such as calcium hydroxide released during Portland cement hydration.

It has been found that the type of calcination process does not play a major role in the final performance of calcined clay; on the contrary it is fundamental that any chosen process allows the optimum calcination temperature to be reached for the type of clay used. Therefore, the choice of the thermal process to be installed has to be dictated mostly by the related capital expenditure and the specific local conditions and opportunities, such as inbound/outbound logistics, fuel availability, plant supplier presence and support, possibility to integrate the process in an existing plant facility.

There are two more aspects to be considered with respect to optimum process conditions during production of calcined clays. One is the fact that such materials tend to strongly increase the water demand of the corresponding cement, due to their high specific surface and intrinsic porosity. This drawback can be partially overcome by calcining at higher temperature. However, strictly related to this is the fact that exceeding the optimum calcination temperature may lead to recrystallization and formation of new stable minerals, which will not react at all as wished. For example, the calcination of kaolinite above 850 °C results in the formation of aluminiumsilicon spinel (Si₃Al₄O₁₂), which at even higher temperatures transforms to mullite (Si₂Al₆O₁₃ or 3Al₂O₃•2SiO₂) and highly crystalline cristobalite (SiO₂).

It is therefore of extreme importance to identify the optimum as well as the maximum temperature to which the clay shall be exposed and to select a reliable thermal process to approach those values sharply for maximized process and product performance.

The following conventional burning systems are normally considered appropriate for application in clay calcination:
Main systems: rotary kilns, flash reactors, and fluidised bed units
Alternative systems: shaft kilns, batch kilns, and tunnel kilns.

The main calcination systems mentioned above are well-known technologies and therefore have a proven record of efficiency. However, some disadvantages can be identified either in the number of moving parts - requiring higher maintenance - or in the high speed of particles - generating internal wear - or in general in the need of fuels which have to be transported to the plant location. Further, there is the need for fuel preparation, drying, grinding, storage, which could in itself be even more complicated than the calcination process itself and there are also the associated exhaust gas emissions. Besides the already mentioned issues, use of the alternative systems considered may be hindered by the needed material size - as in shaft kilns - or the much less energy efficiency - as in batch or tunnel kilns used typically in brick production. Last, but not least, such systems cannot guarantee temperature control to such an accuracy to allow reaching calcination temperatures with minimum deviations to achieve maximum process and product performance.

The solution to the mentioned problems was surprisingly found in the use of microwave technology for clay calcination.

A microwave oven heats materials by subjecting them to microwave radiation. Microwaves are a form of non-ionizing electromagnetic radiation with a frequency higher than ordinary radio waves but lower than infrared light. Large industrial/commercial microwave ovens often use 915 MHz up to 2.45 GHz frequency. Substances absorb energy from the microwaves in a process called dielectric heating. Many molecules (such as those of water) are electric dipoles. Thus, they have a partial positive charge at one end and a partial negative charge at the other, and therefore rotate as they try to align themselves with the alternating electric field of the microwaves. Rotating molecules hit other molecules and put them into motion, thus dispersing energy. This energy, when dispersed as molecular vibration in solids and liquids (i.e., as both potential energy and kinetic energy of atoms), is heat.

The advantages of such technology are manifold:
- Simple design - the heat is generated inside the material itself, no burners are installed, no need of refractories in the heating chamber, except for the transport belt
- Not employing any direct or indirect firing with combustion gas that has to go through the unit - no exhaust gas emission treatment necessary
- Only electric energy required - in suitable areas, self-generation of electricity can be considered in order to significantly reduce production costs and avoid complicated logistics for fuel handling
- Precise and easy temperature and employed heat control - efficient calcination process, lower specific energy consumption
- Modular design - can be applied for continuous production process as bundle of several units, depending on production and energy requirements.

Application of the microwave technology in large industrial processes is rapidly growing, so that the still existing drawbacks, typically the small output capacity and the needed replacement of magnetrons with operational life limited to ∼ 8000 hours, are expected to be overcome in the near future.

Production of calcined clay by microwaves has been considered at lab scale and small samples were produced by this technology. However, such materials were aimed at as catalysts for chemical reactions or as a product used in small quantities, see e.g. abstratc of "Catalytic hydrotreating of heavy vacuum gas oil on Al- and Ti-pillared clays prepared by conventional and microwave irradiation methods" by M.J.Martinez-Ortiza; G.Fetterb; J.M.Dominguez; J.A.Melo-Bandad; R.Ramos-Gómez - Microporous and Mesoporous Materials, issue 2, 2003.

According to the invention, the object of providing further SCM is solved by a use of clay calcined by microwave as supplementary cementitious material in composite binders.

So as to simplify the description the following abbreviations that are usual in the field of cement are used herein: H - H₂O, C - CaO, A - Al₂O₃, F - Fe₂O₃,

M - MgO, S - SiO₂ and $ - SO₃. Compounds are mostly named by the pure form, without explicit mentioning of solid solutions, foreign ion substitution and impurities etc. as are usual in technical and industrial materials. As the man skilled in the art knows, the exact composition of the phases described may vary due to substitution with foreign ions. Such compounds are comprised when mentioning the pure form herein unless it is expressly stated otherwise.

The term clay is defined herein as a solid material comprising at least 25 wt.-% of clay minerals, which are hydrous aluminium silicates. It is a special advantage that clays with very low amounts of clay minerals can be made useful according to the invention.

The term "reactive" shall mean a hydraulic reactivity unless specified otherwise. Hydraulic reactivity designates the reaction of a compound with water or other water containing compounds to form hydrated phases including a reaction of two or more compounds occurring simultaneously.

Herein, clinker designates a sinter product obtained by burning a raw material at elevated temperature and containing at least one hydraulic phase. Burning means a change of one or more property of the starting material such as chemistry, crystallinity, phase composition, spatial arrangement and bonds of lattice atoms which is brought about by a supply of thermal energy. The starting material may be a single material, but usually it is a mixture. The starting material is typically finely ground and then designated as raw meal. The starting material may contain mineralizers, which are substances decreasing the temperature necessary for melting and/or act as fluxes and/or enhance clinker formation e.g. by forming solid solutions or stabilisation of phases. Mineralizers can be part of the starting material components or be added as separate component.

Cement is used to designate a material that, after mixing with water to form a paste, is able to develop mechanical strength by hydraulic reaction. Thus, cement denotes a clinker ground with or without further components, and other mixtures like super sulphated cement and dicalcium silicate cement obtained by hydrothermal treatment. The most typical example is Portland cement (OPC), but other cements like calcium aluminate cement and calcium sulfoaluminate cement are also useful.

A supplementary cementitious material is defined as a pozzolanic and/or latent hydraulic material useful to replace a part of the clinker in a binder. Latent hydraulic materials have a composition that allows hydraulic reaction upon contact with water, wherein typically an activator is needed to enable hardening within technically feasible times. Activator means a substance that accelerates the hardening of latent hydraulic materials. It can be an addition like sulfate or calcium (hydr)oxide and/or products of the hydraulic reaction of the ground clinker, e.g. calcium silicates liberate calcium hydroxide during hardening. Pozzolanic materials are characterized by a content of reactive silica and/or alumina which form strength providing calcium silicate hydrates and calcium aluminate hydrates, respectively, during hydration of the clinker together with the calcium hydroxides liberated. In practice the limit between latent hydraulic and pozzolanic materials is not well defined, for example fly ashes can be both latent hydraulic and pozzolanic depending on their calcium oxide content. Consequently, the term SCM designates both latent hydraulic as well as pozzolanic materials. However, not reactive or only slightly reactive materials like limestone that substantially do not take part in the hydraulic reactivity have to be clearly differentiated from SCM, with which they are sometimes summarized as mineral additions.

The term composite binder designates a dry mixture that can harden hydraulically, i.e. by reaction with water and also underwater, and contains at least a cement and a supplementary cementitious material. A composite binder can additionally contain at least one of admixtures and additives. A binder is used to make building materials like concrete, mortar and pre-cast units upon mixing with water and aggregate and optionally with (further) admixtures and/or additives.

Typical admixtures are chemicals used during cement grinding as grinding aids or performance improvers, e.g. amines and various salts, in amounts less than 1%.

Typical additives are fillers, of natural or industrial origin, that can be added to cement during its manufacture, typically in amounts less than 5%.

The calcined clay used according to the invention can be made from any clay, preferred are materials with a content of at least 30 wt.-%, more preferred at least 50 wt.-% clay minerals such as kaolinite, illite, montmorillonite, palygorskite, sepiolite and mixtures thereof. If desired, the clay can be dried and/or ground prior to calcining, as is known per se. The clay is placed into a suitable container (e.g. an aluminium crucible) or onto a suitable conveyor and calcined by exposing it to microwaves generated by a magnetron. There is neither a need to add carbonate material nor to observe a special atmosphere. However, both measures are not excluded and can be used. Especially, clays that contain carbonates (marls) are useful as clays to be calcined with microwave and used according to the invention.

Microwave ovens have been described before, the common devices are useful. The oven should be equipped with a power control and preferably also with a temperature control. The amount and intensity of microwave energy is as a rule adjusted so that the clay reaches a maximum temperature of 600 to 1000 °C, preferably 700 to 850 °C. This temperature is typically held for 0.5 to 5 hours, preferably for 1 to 2 hours. Usually, a theoretical energy of at least 2.35 kJ/g clay suffices, preferably 3.5 kJ/g are applied.

It can be advantageous to pre-dry the clay at an intermediate temperature of 100 to 120 °C, preferably about 110 °C, at first and hold this temperature for 15 to 60 min., preferably for about 30 min.

With a calcining as that a substantial dehydroxylation is achieved while at the same time overheating can safely be avoided by adjusting the energy output of the magnetron. Temperature is preferably controlled by a thermocouple inserted into the clay and coupled to a controller, preferably a PID (proportional-integral-derivative) controller for controlling microwave power.

The obtained clay calcined by microwave shows an optimal activation of its SCM reactivity without the risk of unwanted crystallization to e.g. mullite. After cooling, for example in air, the calcined clay can be used in the same way as the known SCMs fly ash, granulated blast furnace slag etc. to form composite binders.

The calcined clay can be ground in a compound or in a separate grinding process to the desired fineness. In this usually a compromise is made between maximizing the pozzolanic reaction (increases directly proportional to fineness) and minimizing the impact on water demand (decreases directly proportional to fineness). A useful fineness is from 10 to 40 wt.-% residue on 40 µm sieve, and from 0 to 30 wt.-% residue on a 90 µm sieve.

The amount of clay in the corresponding composite binder may vary from 5 to 55 wt.-%, the chosen amount will be dictated by the quality to target, i.e. the envisaged application of the composite binder. It is also possible to combine the calcined clay used as SCM according to the invention with additional SCMs like e.g. fly ash and granulated blast furnace slag to form the composite binder.

Apart from the SCM used according to the invention and possible additional SCMs the composite binder is made and used as known binders. For example concrete, mortar, custom building products like screed and tile adhesive can be made with the binder. To this end, typically aggregate and water are added. Further, known admixtures and additives can be used and are commonly used, especially admixtures.

The invention will be illustrated further with reference to the examples that follow, without restricting the scope to the specific embodiments described. The invention includes all combinations of described and especially of preferred features that do not exclude each other.

If not otherwise specified any amount in % or parts is by weight and in the case of doubt referring to the total weight of the composition/mixture concerned. A characterization as "approximately", "around" and similar expression in relation to a numerical value means that up to 10 % higher and lower values are included, preferably up to 5 % higher and lower values, and in any case at least up to 1 % higher and lower values, the exact value being the most preferred value or limit.

The term "substantially free" means that a particular material is not purposefully added to a composition, and is only present in trace amounts or as an impurity. As used herein, unless indicated otherwise, the term "free from" means that a composition does not comprise a particular material, i.e. the composition comprises 0 weight percent of such material.

### Example 1

An experimental microwave oven with water-cooled magnetron with maximum emitted MW power 2000 W was used. The power was adjustable through an inverter (from 0 to 2000 W) and the reflected power measured. The oven had a 600x600x600 mm³ reverberating chamber made of AISI 316 stainless steel, a port for the insertion of temperature sensors, and a PID temperature regulator. Control of MW power and recording of reflected power was made through customized software.

A clay containing 31.1 wt.-% quartz, 4.1 wt.-% opal, 3.3 wt.-% illite, 25.8 wt.-% kaolinite, and 5.9 wt.-% montmorillonite as clay minerals as well as 2.6 wt.-% goethite, 2.2 wt.-% hematite, 1.1 wt.-% gibbsite, 1.2 wt.-% gypsum, 1.0 wt.-% anatase, and 21.7 wt.-% amorphous/microcrystalline phases (determined by Rietveld refinement) was used as clay. A sample of the same clay already treated using conventional calcination technology (calcination for 60 min. at 750 °C in a lab furnace) was selected as comparative example.

The procedure used for the calcination was as follows. An alumina crucible was filled with the weighed clay sample and put into the refractory casket inside the MW furnace chamber. A K-type thermocouple was inserted in the centre of the sample, and used to control the MW power through a PID controller. The net power, calculated as the difference between the power emitted by the magnetron and the power reflected towards the magnetron, was recorded, as well as the sample temperature. Preliminary investigations showed that a minimum theoretical energy of 2.35 kJ/g was necessary to dehydrate the kaolinite. The sample was allowed to cool and after cooling weighed again and characterized.

Two sets of tests were performed, producing in each set an amount of about 1 kg of calcined clay:
1. slow calcination at 700°C (temperature program: 30 min. isotherm at 110°C, heating up to 700°C in 2h, 30 min. isotherm at 700°C);
2. fast calcination at 800°C (temperature program: 30 min. isotherm at 110°C, heating up to 800°C in 1 h, 30 min. isotherm at 800°C).
In order to avoid overheating problems, the maximum power was limited to 1500 W.

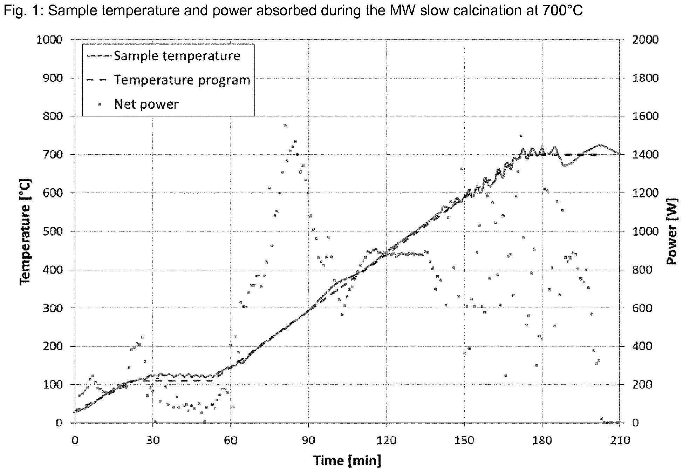

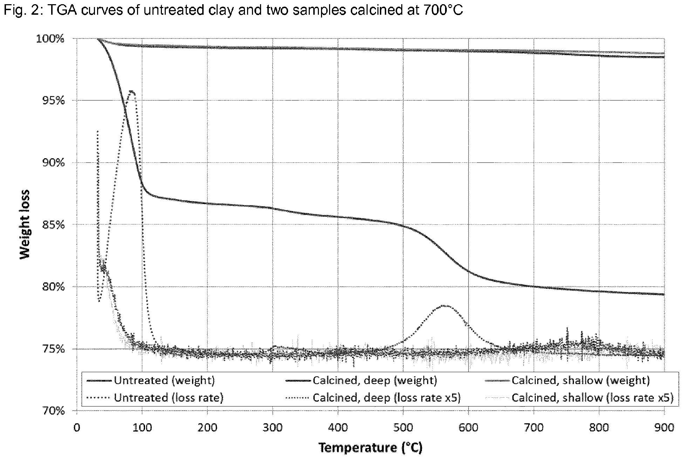

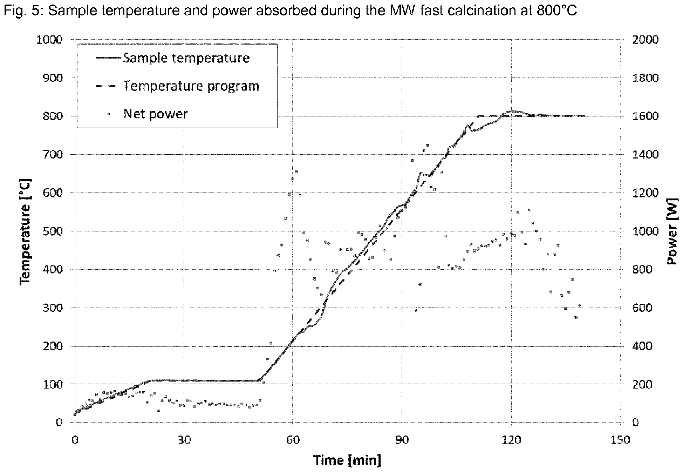

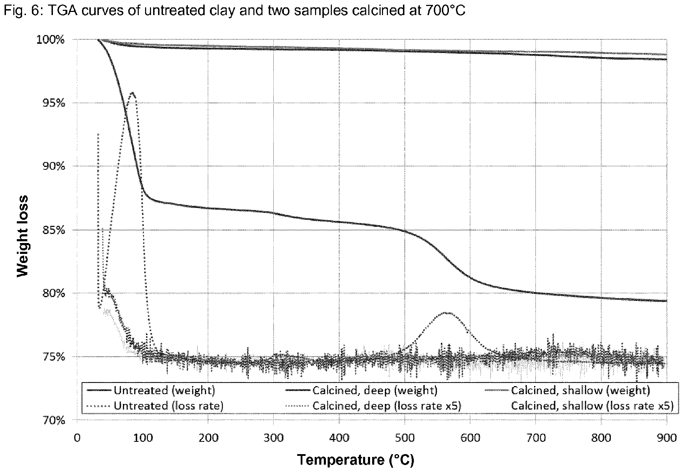

In figure 1 the trends of the temperature (compared with the temperature program) and of the net power absorbed are shown for slow calcination at 700°C. In figure 2 the TGA curve of the untreated clay sample is compared with those of two calcined samples taken in the upper part (shallow) and in the lower part (deep) of the crucible after MW calcination. The loss rate for the calcined sample is magnified by a factor five. From the figures, it is apparent that on the one hand PID-controlled microwave heating is able to guarantee extremely sharp temperature control, on the other hand that microwave energy is evenly distributed and after calcination the three major peaks present in the untreated sample disappeared. A small weight loss (lower than 1 %) was recorded up to 150°C, probably due to the absorption of water from environmental air during the cooling. The total weight loss of the calcined samples at 900°C was about 1.5%.

In figure 3 the trends of the temperature (compared with the temperature program) and of the net power absorbed are shown for fast calcination at 800°C. In figure 4 the TGA curve of the untreated clay sample is compared with those of two calcined samples taken in the upper part (shallow) and in the lower part (deep) of the crucible after MW calcination. The loss rate for the calcined sample is magnified by a factor five. As for the samples calcined at 700°C, temperature control was excellent and the three major peaks present in the untreated sample disappeared. A small weight loss (lower than 1 %) was recorded up to 150°C, probably due to the absorption of water from environmental air during the cooling. The total weight loss of the calcined samples at 900°C is about 1.5%.

Sample characterisation and performance testing was carried out on the calcined clay samples using the following matrix.
- Grinding of calcined clay samples to a fineness similar to that of Portland cement - d(0.5) = 15-25 µm and d(0.9) = 100 -150 µm
- Testing in paste and mortar at 25% replacement of reference cement by calcined clay
   - Compressive strength development (2, 7, 28 and 90 d)
   - Water demand / Mortar spread
The results of performance testing of the kaolinitic clay calcined in a laboratory scale microwave oven are reported in the following table 2.

**Table 2**

| Sample | Clay 1 | Clay 1 | Clay 1 |
|---|---|---|---|
| Calcination | Microwave Oven 700 °C | Microwave Oven 800 °C | Lab furnace 750 °C |
| Water demand [%] | 31,5 | 30,5 | 32,5 |
| relative water demand [%] | 119 | 115 | 123 |
| Activity Index @2d [%] | 67 | 71 | 65 |
| Activity Index @7d [%] | 85 | 87 | 84 |
| Activity Index @28d [%] | 98 | 96 | 94 |
| Activity Index @90d [%] | 101 | 98 | 97 |

Good results for the strength activity index (SAI = Ratio between strength of the 75/25% blend to the 100% reference) were achieved. In the whole study on clay activation, 36 clay samples were calcined under different process conditions. The average SAI was 98% with a standard deviation of 18.

Thus, the present invention provides a method of manufacturing a supplementary cementitious material from clay by calcining and a supplementary cementitious material consisting of clay calcined by microwaves.

Especially preferred embodiments of the invention are as follows:
a) Use of clay calcined by microwaves as SCM in composite binders.
b) Use as in a), wherein a raw clay comprising at least 25 wt.-% clay minerals being hydrous aluminium silicates is used.
c) Use as in b), wherein the clay minerals are chosen from kaolinite, illite, montmorillonite, palygorskite, sepiolite and mixtures of two or more thereof.
d) Use as in b) or c), wherein the raw clay comprises at least 30 wt.-%, preferably at least 50 wt.-% clay minerals.
e) Use as in any one of a) to d), wherein a microwave oven equipped with a power control and preferably also a temperature control is used for calcining the raw clay.
f) Use as in any one of a) to e), wherein the temperature and time for calcining are adjusted so that a substantial dehydroxylation is achieved without crystallization of the calcined clay.
g) Use as in f), wherein the temperature is chosen from the range of 600 to 1000 °C, preferably of 700 to 850 °C, and/or the time for calcining is chosen from the range of 0.5 to 5 hours, preferably of 1 to 2 hours.
h) Use as in f) or g), wherein a theoretical energy of at least 2.35 kJ/g clay, preferably at least 3.5 kJ/g clay, is applied for calcining.
i) Use as in any one of a) to h), wherein the raw clay is pre-dried before or preferably during calcining by exposure to a temperature of 100 to 120 °C for 10 to 60 minutes.
k) Use as in to any one of claims a) to i), wherein the calcined clay is ground to a fineness ranging from 10 to 40 wt.-% residue on 40 µm sieve and from 0 to 30 wt.-% residue on a 90 µm sieve.
l) Use as in any one of a) to k), wherein the calcined clay is contained in an amount from 5 to 55 wt.-% in the composite binder.
m) Use as in to any one of claims a) to I), wherein the composite binder contains admixtures and/or additives.
n) Use as in any one of a) to m), wherein the composite binder contains additional SCMs like fly ash and granulated blast furnace slag.
o) Use of microwaves for calcining clay to be used as SCM in composite binders as defined in any one of a) to n).
p) Method for calcining clay to be used as SCM in composite binders as defined in any one of a) to n), comprising calcining a clay with microwaves wherein the temperature and time for calcining are adjusted so that a substantial dehydroxylation is achieved without crystallization of the calcined clay.
q) SCM comprising calcined clay obtained as defined in p).

## Claims

1. Use of clay calcined by microwaves as supplementary cementitious material in composite binders.

2. Use according to claim 1, wherein a raw clay comprising at least 25 wt.-% clay minerals being hydrous aluminium silicates is used.

3. Use according to claim 2, wherein the clay minerals are chosen from the group consisting of kaolinite, illite, montmorillonite, palygorskite, sepiolite and mixtures of two or more thereof.

4. Use according to claim 2 or 3, wherein the raw clay comprises at least 30 wt.-%, preferably at least 50 wt.-% clay minerals.

5. Use according to any one of claims 1 to 4, wherein a microwave oven equipped with a power control and preferably also a temperature control is used for calcining the raw clay.

6. Use according to any one of claims 1 to 5, wherein the temperature and time for calcining are adjusted so that a substantial dehydroxylation is achieved without crystallization of the calcined clay.

7. Use according to claim 6, wherein the temperature is chosen from the range of 600 to 1000 °C, preferably of 700 to 850 °C, and/or the time for calcining is chosen from the range of 0.5 to 5 hours, preferably of 1 to 2 hours.

8. Use according to claim 6 or 7, wherein a theoretical energy of at least 2.35 kJ/g clay, preferably at least 3.5 kJ/g clay, is applied for calcining.

9. Use according to any one of claims 1 to 8, wherein the raw clay is pre-dried before or preferably during calcining by exposure to a temperature of 100 to 120 °C for 10 to 60 minutes.

10. Use according to any one of claims 1 to 9, wherein the calcined clay is ground to a fineness ranging from 10 to 40 wt.-% residue on 40 µm sieve and from 0 to 30 wt.-% residue on a 90 µm sieve.

11. Use according to any one of claims 1 to 10, wherein the calcined clay is contained in an amount from 5 to 55 wt.-% in the composite binder.

12. Use according to any one of claims 1 to 11, wherein the composite binder contains admixtures and/or additives.

13. Use according to any one of claims 1 to 12, wherein the composite binder contains additional supplementary cementitious materials like fly ash and granulated blast furnace slag.

14. Use of microwaves for calcining clay to be used as supplementary cementitious material in composite binders according to any one of claims 1 to 13.

15. Method for calcining clay to be used as supplementary cementitious material in composite binders according to anyone of claims 1 to 13, comprising calcining a raw clay with microwaves wherein the temperature and time for calcining are adjusted so that a substantial dehydroxylation is achieved without crystallization of the calcined clay.

16. Supplementary cementitious material comprising a calcined clay obtained according to claim 15.
